# EUROPEAN PATENT SPECIFICATION

(11) **EP 3 248 361 B1**
(45) Date of publication and mention of the grant of the patent: **03.07.2019**
(21) Application number: 15702975.2
(22) Date of filing: 19.01.2015
(51) Int. Cl.: H04L 29/08

(54) **TIMERS IN STATELESS ARCHITECTURE**
ZEITGEBER IN ZUSTANDSLOSER ARCHITEKTUR
TEMPORISATEURS DANS UNE ARCHITECTURE SANS ÉTAT

(43) Date of publication of application: 29.11.2017
(73) Proprietor: Telefonaktiebolaget LM Ericsson (publ), 164 83 Stockholm (SE)
(72) Inventor: HALLENSTÅL, Magnus, S-187 50 Täby (SE)
(74) Representative: Brann AB
(86) International application number: PCT/EP2015/050907
(87) International publication number: WO 2016/116133

(56) References cited:
- US-A1- 2009 191 842
- "3rd Generation Partnership Project; Technical Specification Group Core Network and Terminals; User Data Convergence (UDC); Technical realization and information flows; Stage 2 (Release 12)", 3GPP STANDARD; 3GPP TS 23.335, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V12.0.0, 30 September 2014 (2014-09-30), pages 1-39, XP050926356, [retrieved on 2014-09-30]

## Description

### Technical field

The invention relates to apparatus and methods for the provision of timers in a stateless architecture.

### Background

A new paradigm is arising for server type telecom network functions, for example, Internet Protocol (IP) Multimedia Subsystem (IMS) functions such as Proxy Call Session Control Function (P-CSCF); Serving CSCF (S-CSCF); Interrogating CSCF (I-CSCF) and Media Gateway Control Function (MGCF), or 3GPP core network functions such as Serving General Packet Radio Service (GPRS) Support Node (SGSN); Mobility Management Entity (MME) and Mobile Switching Center (MSC) server. In this new paradigm, network functions will be deployed as software components in data centers (e.g., in the "cloud"). The network functions will be divided into specific logic and data functions. A "front end" comprises the logic (e.g., the algorithms) required to undertake the function and a "backend" holds the data required to undertake the function. The backend is typically a database that may, of course, serve a number of network functions that only execute logic.

To get a general understanding of this type of architecture where logic and data are separated from each other, the Third Generation Partnership Project (3GPP) has been specified this for the Home Subscriber Server (HSS) network function in the 3GPP network architecture. This can be seen in 3GPP TS 23.335 (stage 2).

In a stateless architecture in the cloud, the network function logic may be executed in a number of front end virtual machines (VMs), where each VM may serve any operation requested by a client machine. The VMs can do this since, for each operation, the logic will read and write data (also known as states) from and to the back end (database). Thus, it is the database that holds context data for a network function, not the logic. This type of design is commonly termed a stateless architecture.

To improve performance some sort of "stickiness" may be used by the logic. For example, all operations related to a transaction in a network function may always be executed on the same VM (logic instance) and thus the logic instance may store data locally, for example, temporary data needed for that transaction. Data stored locally in the logic is not stored in a redundant manner, i.e. a hardware, VM or software failure will lead to locally stored data being lost. Only the back end database stores data in a redundant manner.

One of the challenges with a stateless architecture is to support network timers. These are used to supervise procedures, operations and transactions in a network function for ensuring a good user experience. Network timers may help regulate load regulations (back off timers) and help provide protection against leaking memory (e.g. by enabling garbage collection) and "hanging" network resources.

A problem with a stateless architecture is to support network timers that need to sustain hardware and VM failures. Network timers are coupled to the front end logic and the logic may store data locally but this will not be stored in a redundant way, since a principal idea behind a stateless architecture is that it is the database that stores data/states redundantly and that each instance of the logic (each front end instance) should be unaware of other logic instances. This allows network functions to easily in and out (removing and adding VMs) within a cloud environment.

Normally when a network timer times out, some sort of action is triggered. For some network timers it is not vital that the action on time out is done, thus no redundancy is needed, but for other timers it is of vital importance for the network and its services that an action is taken and these network timers must sustain hardware and VM failures. US2009191842 A1 discloses a service which sends a message in case a timer espires.

In current solutions one or several VM instances of the front end logic for a network function may poll a backend database. A problem with this is that the front end logic instances must agree on which instance or instances in the cluster of logic shall poll the database and so they need to be aware of each other. Also, polling is a costly process in terms of bandwidth and processing.

### Summary

Exemplary methods and apparatus are aimed at alleviating or solving one or more of the problems mentioned above or any other problem with the art. The invention is defined by the independent claims.

According to the invention in a first aspect, there is provided a front end logic instance (102a-f, 200) of a network function in a stateless architecture of a telecommunications network. The logic instance comprises a means for performing logic, which may be a logic performer (214), configured to perform network function logic to carry out at least part of a network function of the telecommunications network, the logic performer being configured to control a transmitter means, which may be a transmitter (202), and a receiver means, which may be a receiver (204), for transmission and reception of data with a backend database (106, 300) during performance of the network function logic. The logic instance comprises a means for subscribing to a timer, which may be a timer subscriber (216), configured to control the transmitter to transmit a request to the backend database to be notified about a timer event relating to a timer run on the backend database, the request comprising data indicating the timer event. The receiver is further configured to receive a notification that the timer event has occurred.

Optionally, the timer event comprises a timer timeout, and wherein the request comprises data indicating a timeout value for the timer.

Optionally, the logic instance is implemented on a virtual machine.

Optionally, the network function is a 3GPP network function.

Optionally, the 3GPP network function is one of: a Proxy Call Session Control Function, P-CSCF, a Serving CSCF, S-CSCF, an Interrogating CSCF, I-CSCF, a Media Gateway Control Function (MGCF), a Serving General Packet Radio Service Support Node, SGSN, a Mobility Management Entity, MME, and a Mobile Switching Center, MSC, server.

Optionally, the request is transmitted using one of: a simple object access protocol, SOAP; and a lightweight directory access protocol, LDAP.

Optionally, the request relates to a data object stored within the backend database (106), and wherein the timer event comprises a time for which the data object should live.

Optionally, the logic performer 214 is further configured to perform an action associated with the data object following receipt of the notification that the timer event has occurred.

According to the invention in a second aspect, there is provided a method for operating a logic instance (102a-f, 200) of a network function in a stateless architecture of a telecommunications network. The method comprises performing, by a logic performer (214), network function logic to carry out at least part of a network function of the telecommunications network, the logic performer controlling a transmitter (202) and receiver (204) for transmission and reception of data with a backend database (106, 300) during performance of the network function logic. The method comprises controlling, by a timer subscriber (216), the transmitter to transmit a request to the backend database to be notified about a timer event relating to a timer run on the backend database, the request comprising data indicating the timer event. The method comprises receiving, by the receiver, a notification that the timer event has occurred.

Optionally, the timer event comprises a timer timeout, and wherein the request comprises data indicating a timeout value for the timer.

Optionally, the logic instance is implemented on a virtual machine.

Optionally, the network function is a 3GPP network function.

Optionally, the 3GPP network function is one of: a Proxy Call Session Control Function, P-CSCF, a Serving CSCF, S-CSCF, an Interrogating CSCF, I-CSCF, a Media Gateway Control Function (MGCF), a Serving General Packet Radio Service Support Node, SGSN, a Mobility Management Entity, MME, and a Mobile Switching Center, MSC, server.

Optionally, the request is transmitted using one of: a simple object access protocol, SOAP; and a lightweight directory access protocol, LDAP.

Optionally, the request relates to a data object stored within the backend database (106), and wherein the timer event comprises a time for which the data object should live.

Optionally, the logic performer 214 performs an action associated with the data object following receipt of the notification that the timer event has occurred.

According to the invention in a third aspect, there is provided a computer program (210) comprising instructions which, when executed on at least one processor, cause the at least one processor to carry out the method according to any method above.

According to the invention in a fourth aspect, there is provided a carrier (212) containing the computer program (210) above, wherein the carrier is one of an electronic signal, optical signal, radio signal, or non-transitory computer readable storage medium.

According to the invention in a fifth aspect, there is provided a backend database (106, 300) for use in a stateless architecture of a telecommunications network. The backend database comprises a receiving means, which may be a receiver (302), configured to receive a request from a front end logic instance (102a-f, 200) of a network function in the telecommunications network to be notified about a timer event relating to a timer, the request comprising data indicating the timer event. The backend database comprises a timer management means, which may be a timer manager (314), configured to run the timer and determine whether the timer event has occurred. The backend database comprises a timeout notifying means, which may be a timeout notifier (316), configured, based on the determination of whether the timer event has occurred, to control a transmitter (302) to transmit a notification to the front end logic instance.

Optionally, the timer event comprises a timer timeout, and wherein the request comprises data indicating a timeout value for the timer.

Optionally, the request is transmitted using one of: a simple object access protocol, SOAP; and a lightweight directory access protocol, LDAP.

Optionally, the request relates to a data object stored within the backend database, and wherein the timer event comprises a time for which the data object should live.

Optionally, the backend database further comprises a garbage collection means, which may be a garbage collector (318), configured to delete the data object if it is determined that the timer event has occurred.

Optionally, the garbage collector (318) is configured to wait for a period of time before deleting the data object.

According to the invention in a sixth aspect, there is provided a method for operating a backend database (106, 300) for use in a stateless architecture of a telecommunications network. The method comprises receiving, by a receiver (302), a request from a front end logic instance (102a-f, 200) of a network function in the telecommunications network to be notified about a timer event relating to a timer, the request comprising data indicating the timer event. The method comprises running, by a timer manager (314), the timer and determining whether the timer event has occurred. The method comprises controlling a transmitter (302), by a timeout notifier (316), based on the determination of whether the timer event has occurred, to transmit a notification to the front end logic instance.

Optionally, the timer event comprises a timer timeout, and wherein the request comprises data indicating a timeout value for the timer.

Optionally, the request is transmitted using one of: a simple object access protocol, SOAP; and a lightweight directory access protocol, LDAP.

Optionally, the request relates to a data object stored within the backend database, and wherein the timer event comprises a time for which the data object should live.

Optionally, a garbage collector (318) deletes the data object if it is determined that the timer event has occurred.

Optionally, the garbage collector (318) waits for a period of time before deleting the data object.

According to the invention in a seventh aspect, there is provided a computer program (310) comprising instructions which, when executed on at least one processor, cause the at least one processor to carry out the method according to any of the above methods.

According to the invention in an eighth aspect, there is provided a carrier (312) containing the computer program (310) above, wherein the carrier is one of an electronic signal, optical signal, radio signal, or non-transitory computer readable storage medium.

### Brief description of drawings

Exemplary embodiments of the invention are disclosed herein with reference to the accompanying drawings, in which:
- Figure 1: is a block schematic diagram of a stateless architecture;
- Figure 2: is a block schematic diagram of a logic instance;
- Figure 3: is a block schematic diagram of a database; and
- Figure 4: is a signalling diagram.

### Detailed description

In exemplary methods and apparatus, data objects (states) in a backend database of a network function will be associated with a timer value, which may be called a "time to live" (T2L) value. The T2L value may determine how long a data object will live for, that is, it may set a time at which the data object will be deleted. For critical timers, the front end logic may subscribe to the expiry of a T2L timer for a data object. At expiry of the T2L timer, the backend database may inform the front end logic, for example, by informing any of the VMs that hold the front end logic (i.e. any instance of the logic). This allows the execution of the front end logic to be done by any of the logic instances (VMs) with consistent and reliable timer supervision maintained by the backend database.

A subscription by a front end logic to timeout of a timer value could be implemented in a similar way to HSS front ends subscribing to changes in database objects in the HSS backend and being informed accordingly, as described in 3GPP TS 23.335.

A back end database may also use the T2L timer associated with data objects to clean up the data stored in the database. The T2L timer may therefore serve the network function to provide timer support to a front end logic in a stateless architecture and may also serve the backend database to enable deletion of expired data objects (garbage collection).

In case the action of a time out is not critical, the logic may not need to be subscribed to T2L timeout, but still the database may still use the T2L to do garbage collection.

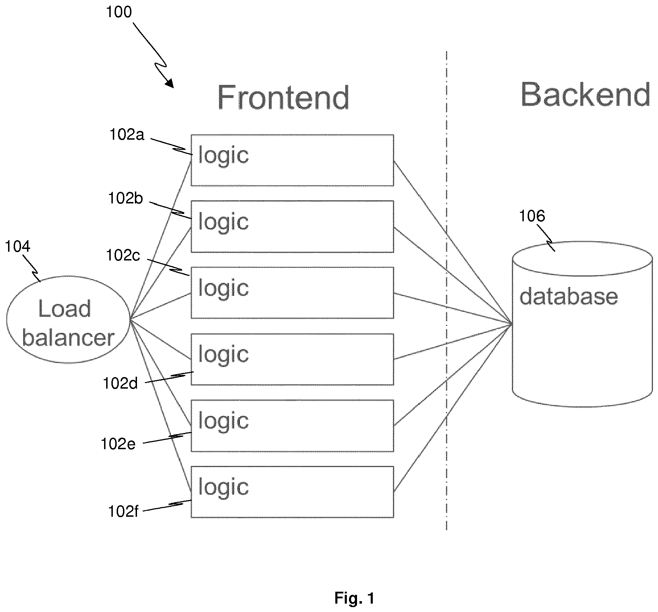

Figure 1 shows an exemplary stateless architecture. A front end 100 comprises a plurality of logic instances 102a-f that relate to one or more network functions, such as a P-CSCF, S-CSCF, I-CSCF, MGCF, SGSN, MME or MSC. Each logic instance 102a-f may be implemented in a VM. The logic instances 102a-f are in data communication with a load balancer 104 and a backend database 106. The logic instances 102a-f may use standard data communication for communication with the load balancer 104 and the backend database 106. The load balancer 104 may provide access to the wider telecommunications network for the network functions implemented by the stateless architecture. As set out above, the backend database 106 may store data (or states) relating to the logic instances 102a-f in a redundant manner. A logic instance 102a-f do not store any data more than what is needed during a transaction relating to the network function implemented or partially implemented by that logic instance 102a-f. Other data may be stored in the database 106. In exemplary methods and apparatus, the database 106 may be distributed, for example, within a cloud environment.

It is noted that the term "data communication", unless otherwise stated, encompasses any method and associated apparatus for communicating data, for example optical and electrical methods. Data communication may be wired or wireless or a combination of both. Therefore, data communication may be, for example, a network communication over a wired connection or a network communication of over a radio frequency connection, or both.

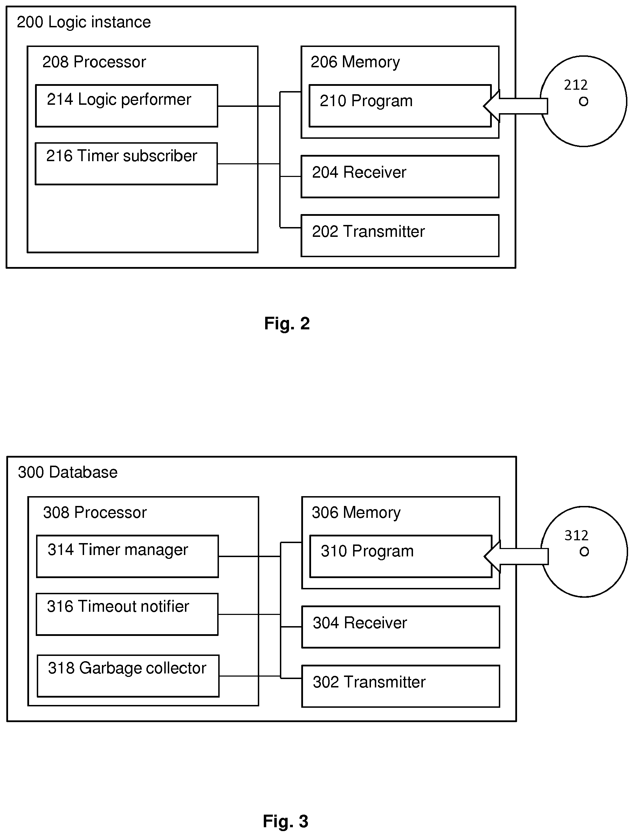

Figure 2 shows a schematic representation of a Logic instance 200, which may be used in the stateless architecture system of Figure 1 as any of the logic instances 102a-f and may also be implemented on a VM. The Logic instance 200 comprises a transmitter 202 and a receiver 204. The transmitter 202 and receiver 204 may be in data communication with other network entities such as UEs, servers and/or functions in a telecommunications network and are configured to transmit and receive data accordingly.

The Logic instance 200 further comprises a memory 206 and a processor 208. The memory 206 may comprise a non-volatile memory and/or a volatile memory. The memory 206 may have a computer program 210 stored therein. The computer program 210 may be configured to undertake the methods disclosed herein. The computer program 210 may be loaded in the memory 206 from a non-transitory computer readable medium 212, on which the computer program is stored. The processor 208 is configured to undertake at least the functions of a logic performer 214 and a timer subscriber 216, as set out below.

The memory 206 and processor 208 may be virtual resources of physical resources of a VM, present on a hypervisor.

Each of the transmitter 202 and receiver 204, memory 206, processor 208, logic performer 214 and timer subscriber 216, is in data communication with the other features 202, 204, 206, 208, 210, 214, 216 of the Logic instance 200. The Logic instance 200 can be implemented as a combination of computer hardware and software. In particular, the logic performer 214 and the timer subscriber 216 may be implemented as software configured to run on the processor 208. The memory 206 stores the various programs/executable files that are implemented by a processor 208, and also provides a storage unit for any required data. The programs/executable files stored in the memory 206, and implemented by the processor 208, can include the logic performer 214 and the timer subscriber 216, but are not limited to such.

Figure 3 shows a schematic representation of a backend database 300, which may be used in the stateless architecture system of Figure 1. The database 300 comprises a transmitter 302 and a receiver 304. The transmitter 302 and receiver 304 are in data communication with other network entities such as UEs, servers and/or functions in a telecommunications network and are configured to transmit and receive data accordingly.

The database 300 further comprises a memory 306 and a processor 308. The memory 306 may comprise a non-volatile memory and/or a volatile memory. The memory 306 may have a computer program 310 stored therein. The computer program 310 may be configured to undertake the methods disclosed herein. The computer program 310 may be loaded in the memory 306 from a non-transitory computer readable medium 312, on which the computer program is stored. The processor 308 is configured to undertake at least the functions of timer manager 314, a timeout notifier 316 and a garbage collector 318, as set out below.

Each of the transmitter 302 and receiver 304, memory 306, processor 308, timer manager 314, timeout notifier 316 and garbage collector 318, is in data communication with the other features 302, 304, 306, 308, 310, 314, 316, 318 of the database 300. The database 300 can be implemented as a combination of computer hardware and software. In particular, the timer manager 314, the timeout notifier 316 and the garbage collector 318 may be implemented as software configured to run on the processor 308. The memory 306 stores the various programs/executable files that are implemented by a processor 308, and also provides a storage unit for any required data. The programs/executable files stored in the memory 306, and implemented by the processor 308, can include the timer manager 314, the timeout notifier 316 and the garbage collector 318, but are not limited to such.

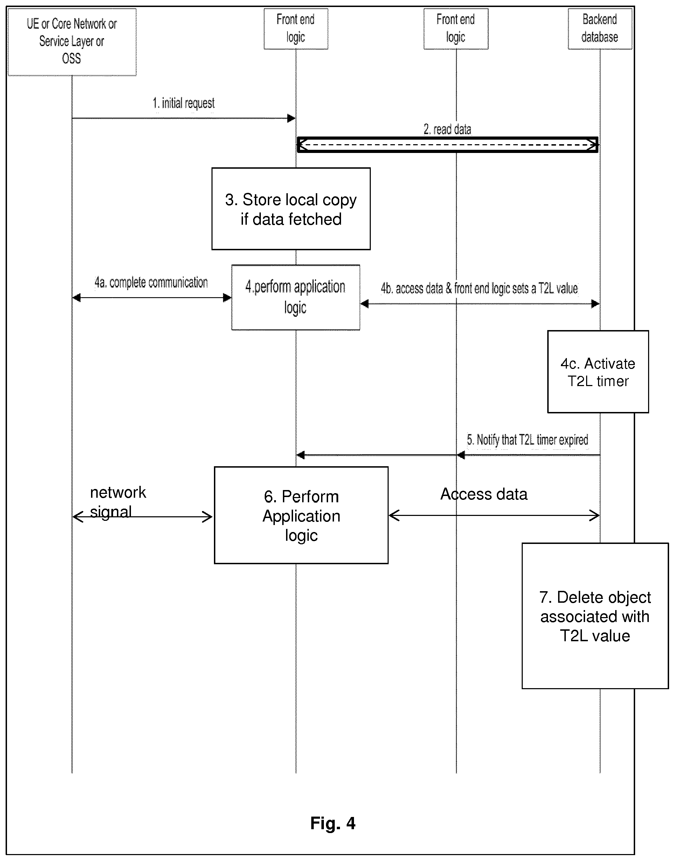

Figure 4 is a signaling diagram showing an exemplary method. Figure 4 is a modification of the procedures shown in 3GPP TS 23.335 at Figure 5.1-1 as is described below.
1. A receiver 204 of the front end logic 102a-f receives an initial request on one of the supported interfaces from a user equipment (UE), Core Network, Service Layer or OSS. The request may be received via the load balancer 104.
2. When receiving an initial request message, the logic performer 214 of the front end logic 102a-f may request, receive and read data required for completion of the network function logic from the backend database 106.
3. The logic performer 214 may store the read data (if any) as a temporary local copy in the memory 206 and use it when performing its network function logic. There may be network functions that do not need to retrieve and store data from the backend database 106 in order to perform the network function logic.
4. The logic performer 214 performs its network function logic.
4a. As part of performing the network function logic, the logic performer 214 shall continue and complete the communication with the UE, Core Network, Service Layer or OSS using the transmitter 202. This may include sending messages to and receiving messages from entities within the UE, Core Network, Service Layer or OSS other than the entity that sent the initial request.
4b. As part of performing the network function logic, the logic performer 214 may access data stored redundantly or store data redundantly in the backend database 106 if so required by the network function. This may happen more often than once. Steps 4a and 4b may be performed in any order of sequence. In addition, a timer subscriber 216 transmits a request to the backend database 106 to be notified of a particular timer event. The request may subscribe the front end logic instance 102a-f to events of a network timer (T2L). The request may comprise data indicating the timer event, such as a timeout value, at which the timer will timeout for that particular network function.
4c. The timer manager 314 of the backend database 106 may, upon receipt of the request, activate the timer (if it is not already activated).
5. The timeout notifier 216 of the backend database 106 sends a notification message to the appropriate one or more front end logic instances 102a-f if the timer subscribed to in step 4b has timed out, i.e. reached or exceeded its timeout value.
6. After notification that the network timer has expired, the logic performer 214 of the front end logic 200 performs its network function logic associated with timeout of the network timer, for example clearing a session, or repeating step 4.
7. After network function logic is completed, the garbage collector 318 of the database 300 may delete its copy of the data related to the network function logic.

To exemplify how the exemplary methods and apparatus may be implemented and what protocols may be used, 3GPP TS29.335 may be relied upon. Exemplary methods and apparatus may use methods similar to the "subscribe and notification" methods described in 3GPP TS29.335, which uses Simple Object Access Protocol (SOAP). It is noted that this is one exemplary method, but others may be used. For example, the T2L timeout value (or other timer event value) could be part of the actual data model specification, where data objects during specification time get a T2L value. The data model specification may organise data elements and standardise how data elements relate to one another. A data model specification explicitly determines the structure of data. Data model specifications may be specified in a data modelling notation e.g. in a XML schema. In alternative exemplary methods and apparatus, the T2L timeout value (or other timer event value) can be a known element within a data object. When storing the information, using some sort of protocol it could have been specified that a certain protocol element or message (message containing several elements) has a T2L value. The element(s) is stored in the database. The protocols used for communication between the front end logic instance (102a-f) and the backend database 106 do not have to be SOAP and/or lightweight directory access protocol (LDAP) as in 29.335, but could be other protocols and associated APIs. These may be Web services, e.g. REST (API RESTful), Diameter, NetConf or FTP.

The following are XML schema showing an exemplary implementation of the methods and apparatus disclosed.

XML schema for subscription to a timer:

```
       xs:element name="subscription">
                      <xs:complexType>
                             <xs:sequence>
               <xs:element name="frontEndID" type="xs:string"/>
               <xs:element name="serviceName" type="xs:string" minOccurs="0"/>
                                     <xs:element name="originalEntity"
       type="xs:string" minOccurs="0"/>
                                     <xs:element ref="requestedData"
       maxOccurs="unbounded"/>
                              </xs:sequence>
                              <xs:attribute name="expiryTime" type="xs:dateTime"
       use="optional"/>
                              <xs:attribute name="TimeToLive" type="xs:Time"
       use="optional"/>
                              <xs:attribute name="typeOfSubscription"
       type="typeOfSubscriptionType"/>
                              <xs:attribute name="typeOfNotification"
       type="typeOfNotificationType"/>
                      </xs:complexType>
       </xs:element>
```

It is noted that the code <xs:attribute name="TimeToLive" type="xs:Time" use="optional"/> specifies subscription to the T2L timer and may be transmitted by the timer subscriber 216. The "TimeToLive" attribute may be interpreted by the timer manager 314 of the backend database 106 as how long the data object referred to can live. This sets a timeout value in the backend database 106. The timer manager 314 increments the T2L timer until it reaches the timeout value and the timeout notifier 316 controls the transmitter 302 of the backend database 106 to transmit a notification to the logic instance 102a-f.

XML schema for notification of a timer event to a logic instance:

```
       <xs:simpleType name="operationType">
                      <xs:restriction base="xs:string">
                             <xs:enumeration value="add"/>
                             <xs:enumeration value="modify"/>
                             <xs:enumeration value="delete"/>
                             <xs:enumeration value="timeout"/>
                             <xs:enumeration value="none"/>
                      </xs:restriction>
       </xs:simpleType>
```

It is noted that the code <xs:enumeration value="timeout"/> specifies that a notification should be sent when the timeout value of the timer is reached. When the logic instance 102a-f receives a notification from the backend database 106 with notification type "timeout" the logic performer 214 of the logic instance 102a-f will undertake the function it needs to do due to timeout of the timer.

The database 106 that sent the notification can after some time allowing the logic to act first, delete the data object that the timer referred to. That is, the request transmitted to the backend database 106 may associate the timer with a data object stored on the database 106. After the timer event has occurred, the data object may no longer be needed and so the garbage collector 318 of the database 106 may delete the object from the database 106. The garbage collector 318 may be configured to wait for a period of time before deleting the data object.

A computer program may be configured to provide any of the above described methods. The computer program may be provided on a computer readable medium. The computer program may be a computer program product. The product may comprise a non-transitory computer usable storage medium. The computer program product may have computer-readable program code embodied in the medium configured to perform the method. The computer program product may be configured to cause at least one processor to perform some or all of the method.

Various methods and apparatus are described herein with reference to block diagrams or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

Computer program instructions may also be stored in a computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/Blu-ray).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks.

Accordingly, the invention may be embodied in hardware and/or in software (including firmware, resident software, micro-code, etc.) that runs on a processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated.

The skilled person will be able to envisage other embodiments without departing from the scope of the appended claims.

## Claims

1. A front end logic instance (102a-f, 200) of a network function in a stateless architecture of a telecommunications network, the logic instance comprising:
a logic performer (214) configured to perform network function logic to carry out at least part of a network function of the telecommunications network, the logic performer being configured to control a transmitter (202) and receiver (204) for transmission and reception of data with a backend database (106, 300) during performance of the network function logic;
a timer subscriber (216) configured to control the transmitter to transmit a request to the backend database to be notified about a timer event relating to a timer run on the backend database, the request comprising data indicating the timer event,
wherein the receiver of the front end logic instance (102a-f, 200) is further configured to receive a notification that the timer event of the timer has occurred.

2. A front end logic instance (102a-f, 200) according to claim 1, wherein the timer event comprises a timer timeout, and wherein the request comprises data indicating a timeout value for the timer, and/or wherein the logic instance is implemented on a virtual machine.

3. A front end logic instance (102a-f, 200) according to any preceding claim, wherein the network function is a 3GPP network function, and optionally wherein the 3GPP network function is one of: a Proxy Call Session Control Function, P-CSCF, a Serving CSCF, S-CSCF, an Interrogating CSCF, I-CSCF, a Media Gateway Control Function (MGCF), a Serving General Packet Radio Service Support Node, SGSN, a Mobility Management Entity, MME, and a Mobile Switching Center, MSC, server.

4. A front end logic instance (102a-f, 200) according to any preceding claim, wherein the request is transmitted using one of: a simple object access protocol, SOAP; and a lightweight directory access protocol, LDAP, and/or wherein the request relates to a data object stored within the backend database (106), and wherein the timer event comprises a time for which the data object should live, and/or wherein the logic performer 214 is further configured to perform an action associated with the data object following receipt of the notification that the timer event has occurred.

5. A method for operating a front end logic instance (102a-f, 200) of a network function in a stateless architecture of a telecommunications network, the method comprising:
performing, by a logic performer (214), network function logic to carry out at least part of a network function of the telecommunications network, the logic performer controlling a transmitter (202) and receiver (204) for transmission and reception of data with a backend database (106, 300) during performance of the network function logic;
controlling, by a timer subscriber (216), the transmitter to transmit a request to the backend database to be notified about a timer event relating to a timer run on the backend database, the request comprising data indicating the timer event; and
receiving, by the receiver of the front end logic instance (102a-f, 200), a notification that the timer event of the timer has occurred.

6. A method according to claim 5, wherein the timer event comprises a timer timeout, and wherein the request comprises data indicating a timeout value for the timer, and/or wherein the logic instance is implemented on a virtual machine.

7. A method according to claim 5 or 6, wherein the network function is a 3GPP network function, and optionally wherein the 3GPP network function is one of: a Proxy Call Session Control Function, P-CSCF, a Serving CSCF, S-CSCF, an Interrogating CSCF, I-CSCF, a Media Gateway Control Function (MGCF), a Serving General Packet Radio Service Support Node, SGSN, a Mobility Management Entity, MME, and a Mobile Switching Center, MSC, server.

8. A method according to any of claims 5 to 7, wherein the request is transmitted using one of: a simple object access protocol, SOAP; and a lightweight directory access protocol, LDAP, and/or wherein the request relates to a data object stored within the backend database (106), and wherein the timer event comprises a time for which the data object should live, and/or wherein the logic performer 214 performs an action associated with the data object following receipt of the notification that the timer event has occurred.

9. A backend database (106, 300) for use in a stateless architecture of a telecommunications network, the backend database comprising:
a receiver (302) configured to receive a request from a front end logic instance (102a-f, 200) of a network function in the telecommunications network to be notified about a timer event relating to a timer, the request comprising data indicating the timer event;
a timer manager (314) configured to run the timer and determine whether the timer event has occurred; and
a timeout notifier (316) configured, based on the determination of whether the timer event has occurred, to control a transmitter (302) to transmit a notification to the front end logic instance.

10. A backend database (106, 300) according to claim 9, wherein the timer event comprises a timer timeout, and wherein the request comprises data indicating a timeout value for the timer.

11. A backend database (106, 300) according to claim 9 or 10, wherein the request is transmitted using one of: a simple object access protocol, SOAP; and a lightweight directory access protocol, LDAP.

12. A backend database (106, 300) according to any of claims 9 to 11, wherein the request relates to a data object stored within the backend database, and wherein the timer event comprises a time for which the data object should live, and optionally, further comprising a garbage collector (318) configured to delete the data object if it is determined that the timer event has occurred, and further optionally wherein the garbage collector (318) is configured to wait for a period of time before deleting the data object.

13. A method for operating a backend database (106, 300) for use in a stateless architecture of a telecommunications network, the method comprising:
receiving, by a receiver (302), a request from a front end logic instance (102a-f, 200) of a network function in the telecommunications network to be notified about a timer event relating to a timer, the request comprising data indicating the timer event;
running, by a timer manager (314), the timer and determining whether the timer event has occurred; and
controlling a transmitter (302), by a timeout notifier (316), based on the determination of whether the timer event has occurred, to transmit a notification to the front end logic instance.

14. A method according to claim 13, wherein the timer event comprises a timer timeout, and wherein the request comprises data indicating a timeout value for the timer, and/or wherein the request is transmitted using one of: a simple object access protocol, SOAP; and a lightweight directory access protocol, LDAP.

15. A method according to claim 13or 14, wherein the request relates to a data object stored within the backend database, and wherein the timer event comprises a time for which the data object should live, and optionally further comprising a garbage collector (318) deleting the data object if it is determined that the timer event has occurred, and further optionally wherein the garbage collector (318) waits for a period of time before deleting the data object.

## Patentansprüche

1. Logische Frontend-Instanz (102a-f, 200) einer Netzwerkfunktion in einer zustandslosen Architektur eines Telekommunikationsnetzwerks, wobei die logische Instanz Folgendes umfasst:
einen Logikdurchführer (214), der dazu konfiguriert ist, Netzwerkfunktionslogik durchzuführen, um mindestens einen Teil einer Netzwerkfunktion des Telekommunikationsnetzwerks zu realisieren, wobei der Logikdurchführer dazu konfiguriert ist, einen Transmitter (202) und einen Receiver (204) zum Übermitteln von Daten an eine Backend-Datenbank und zum Empfangen von Daten von einer Backend-Datenbank (106, 300) während des Durchführens der Netzwerkfunktionslogik zu steuern;
einen Zeitgeberteilnehmer (216), der dazu konfiguriert ist, den Transmitter zu steuern, um eine Anfrage an die Backend-Datenbank zu übermitteln, um über ein Zeitgeberereignis benachrichtigt zu werden, das sich auf einen Zeitgeberdurchlauf an der Backend-Datenbank bezieht, wobei die Anfrage Daten umfasst, die das Zeitgeberereignis anzeigen,
wobei der Receiver der logischen Frontend-Instanz (102a-f, 200) ferner dazu konfiguriert ist, eine Benachrichtigung zu empfangen, dass das Zeitgeberereignis des Zeitgebers aufgetreten ist.

2. Logische Frontend-Instanz (102a-f, 200) nach Anspruch 1, wobei das Zeitgeberereignis eine Zeitgeberzeitüberschreitung umfasst und wobei die Anfrage Daten umfasst, die einen Zeitüberschreitungswert für den Zeitgeber anzeigen, und/oder wobei die logische Instanz in einer virtuellen Maschine implementiert ist.

3. Logische Frontend-Instanz (102a-f, 200) nach einem der vorstehenden Ansprüche, wobei die Netzwerkfunktion eine 3GPP-Netzwerkfunktion ist und wobei die 3GPP-Netzwerkfunktion gegebenenfalls eine des Folgenden ist: eine Proxy Call Session Control Function, P-CSCF, eine Serving CSCF, S-CSCF, eine Interrogating CSCF, I-CSCF, eine Media Gateway Control Function (MGCF), eine Serving General Packet Radio Service (GPRS) Support Node, SGSN, eine Mobility Management Entity, MME, und ein Mobile Switching Center (MSC)-Server.

4. Logische Frontend-Instanz (102a-f, 200) nach einem der vorstehenden Ansprüche, wobei die Anfrage unter Verwendung eines des Folgenden übermittelt wird: eines Simple Object Access Protocol, SOAP; und eines Lightweight Directory Access Protocol, LDAP, und/oder wobei die Anfrage sich auf ein Datenobjekt bezieht, das innerhalb der Backend-Datenbank (106) gespeichert ist, und wobei das Zeitgeberereignis eine Zeit umfasst, für welche das Datenobjekt aktiv sein soll, und/oder wobei der Logikdurchführer 214 ferner dazu konfiguriert ist, eine Aktion durchzuführen, die mit dem Datenobjekt assoziiert ist, das dem Empfang der Benachrichtigung folgt, dass das Zeitgeberereignis aufgetreten ist.

5. Verfahren zum Betreiben einer logischen Frontend-Instanz (102a-f, 200) einer Netzwerkfunktion in einer zustandslosen Architektur eines Telekommunikationsnetzwerks, wobei das Verfahren Folgendes umfasst:
Durchführen, durch einen Logikdurchführer (214), von Netzwerkfunktionslogik, um mindestens einen Teil einer Netzwerkfunktion des Telekommunikationsnetzwerks zu realisieren, wobei der Logikdurchführer einen Transmitter (202) und einen Receiver (204) zum Übermitteln von Daten an eine Backend-Datenbank und zum Empfangen von Daten von einer Backend-Datenbank (106, 300) während des Durchführens der Netzwerkfunktionslogik steuert,
Steuern, durch einen Zeitgeberteilnehmer (216), des Transmitters, um eine Anfrage an die Backend-Datenbank zu übermitteln, um über ein Zeitgeberereignis benachrichtigt zu werden, das sich auf einen Zeitgeberlauf an der Backend-Datenbank bezieht, wobei die Anfrage Daten umfasst, die das Zeitgeberereignis anzeigen; und
Empfangen, durch den Receiver der logischen Frontend-Instanz (102a-f, 200) einer Benachrichtigung, dass das Zeitgeberereignis aufgetreten ist.

6. Verfahren nach Anspruch 5, wobei das Zeitgeberereignis eine Zeitgeberzeitüberschreitung umfasst und wobei die Anfrage Daten umfasst, die einen Zeitüberschreitungswert für den Zeitgeber anzeigen, und/oder wobei die logische Instanz in einer virtuellen Maschine implementiert ist.

7. Verfahren nach Anspruch 5 oder 6, wobei die Netzwerkfunktion eine 3GPP-Netzwerkfunktion ist und wobei die 3GPP-Netzwerkfunktion gegebenenfalls eine des Folgenden ist: eine Proxy Call Session Control Function, P-CSCF, eine Serving CSCF, S-CSCF, eine Interrogating CSCF, I-CSCF, eine Media Gateway Control Function (MGCF), eine Serving General Packet Radio Service (GPRS) Support Node, SGSN, eine Mobility Management Entity, MME, und einen Mobile Switching Center (MSC)-Server.

8. Verfahren nach einem der Ansprüche 5 bis 7, wobei die Anfrage unter Verwendung eines des Folgenden übermittelt wird: eines Simple Object Access Protocol, SOAP; und eines Lightweight Directory Access Protocol, LDAP, und/oder wobei die Anfrage sich auf ein Datenobjekt bezieht, das innerhalb der Backend-Datenbank (106) gespeichert ist, und wobei das Zeitgeberereignis eine Zeit umfasst, für welche das Datenobjekt aktiv sein soll, und/oder wobei der Logikdurchführer 214 eine Aktion durchführt, die mit dem Datenobjekt assoziiert ist, das dem Empfang der Benachrichtigung folgt, dass das Zeitgeberereignis aufgetreten ist.

9. Backend-Datenbank (106, 300) zur Verwendung in einer zustandslosen Architektur eines Telekommunikationsnetzwerks, wobei die Backend-Datenbank Folgendes umfasst:
einen Receiver (302), der dazu konfiguriert ist, eine Anfrage von einer logischen Frontend-Instanz (102a-f, 200) einer Netzwerkfunktion in dem Telekommunikationsnetzwerk zu empfangen, um über ein Zeitgeberereignis benachrichtigt zu werden, das sich auf einen Zeitgeber bezieht, wobei die Anfrage Daten umfasst, die das Zeitgeberereignis anzeigen;
einen Zeitgebermanager (314), der dazu konfiguriert ist, den Zeitgeber auszuführen und zu bestimmen, ob das Zeitgeberereignis aufgetreten ist; und
einen Zeitüberschreitungsbenachrichtiger (316), der basierend auf der Bestimmung, ob das Zeitgeberereignis aufgetreten ist, dazu konfiguriert ist, einen Transmitter (302) zu steuern, um eine Benachrichtigung an die logische Frontend-Instanz zu übermitteln.

10. Backend-Datenbank (106, 300) nach Anspruch 9, wobei das Zeitgeberereignis eine Zeitgeberzeitüberschreitung umfasst und wobei die Anfrage Daten umfasst, die einen Zeitüberschreitungswert für den Zeitgeber anzeigen.

11. Backend-Datenbank (106, 300) nach Anspruch 9 oder 10, wobei die Anfrage unter Verwendung eines des Folgenden übermittelt wird: eines Simple Object Access Protocol, SOAP; und eines Lightweight Directory Access Protocol, LDAP.

12. Backend-Datenbank (106, 300) nach einem der Ansprüche 9 bis 11, wobei die Anfrage sich auf ein Datenobjekt bezieht, das innerhalb der Backend-Datenbank gespeichert ist, und wobei das Zeitgeberereignis eine Zeit umfasst, für welche das Datenobjekt aktiv sein soll, und gegebenenfalls ferner einen Garbage Collector (318) umfassend, der dazu konfiguriert ist, das Datenobjekt zu löschen, falls bestimmt ist, dass das Zeitgeberereignis aufgetreten ist, und ferner wobei der Garbage Collector (318) gegebenenfalls dazu konfiguriert ist, einen Zeitraum vor dem Löschen des Datenobjekts abzuwarten.

13. Verfahren zum Betreiben einer Backend-Datenbank (106, 300) zur Verwendung in einer zustandslosen Architektur eines Telekommunikationsnetzwerks, wobei das Verfahren Folgendes umfasst:
Empfangen, durch einen Receiver (302) einer Anfrage von einer logischen Frontend-Instanz (102a-f, 200) einer Netzwerkfunktion in dem Telekommunikationsnetzwerk, um über ein Zeitgeberereignis benachrichtigt zu werden, das sich auf einen Zeitgeber bezieht, wobei die Anfrage Daten umfasst, die das Zeitgeberereignis anzeigen;
Ausführen, durch einen Zeitgebermanager (314), des Zeitgebers und Bestimmen, ob das Zeitgeberereignis aufgetreten ist; und
Steuern eines Transmitters (302) durch einen Zeitüberschreitungsbenachrichtiger (316), basierend auf der Bestimmung, ob das Zeitgeberereignis aufgetreten ist, um eine Benachrichtigung an die logische Frontend-Instanz zu übermitteln.

14. Verfahren nach Anspruch 13, wobei das Zeitgeberereignis eine Zeitgeberzeitüberschreitung umfasst und wobei die Anfrage Daten umfasst, die einen Zeitüberschreitungswert für den Zeitgeber anzeigen, und/oder wobei die Anfrage unter Verwendung eines des Folgenden übermittelt wird: eines Simple Object Access Protocol, SOAP; und eines Lightweight Directory Access Protocol, LDAP.

15. Verfahren nach Anspruch 13 oder 14, wobei die Anfrage sich auf ein Datenobjekt bezieht, das innerhalb der Backend-Datenbank gespeichert ist, und wobei das Zeitgeberereignis eine Zeit umfasst, für welche das Datenobjekt aktiv sein soll, und gegebenenfalls ferner einen Garbage Collector (318) umfassend, der das Datenobjekt löscht, falls bestimmt ist, dass das Zeitgeberereignis aufgetreten ist, wobei ferner der Garbage Collector gegebenenfalls (318) einen Zeitraum abwartet, bevor er das Datenobjekt löscht.

## Revendications

1. Instance de logique frontale (102a-f, 200) d'une fonction de réseau dans une architecture sans état d'un réseau de télécommunications, l'instance de logique comprenant :
un exécutant de logique (214) configuré pour exécuter une logique de fonction de réseau pour mettre en oeuvre au moins une partie d'une fonction de réseau du réseau de télécommunications, l'exécutant de logique étant configuré pour commander un émetteur (202) et un récepteur (204) pour une émission et une réception de données avec une base de données dorsale (106, 300) pendant l'exécution de la logique de fonction de réseau ;
un abonné de temporisateur (216) configuré pour commander l'émetteur pour émettre une demande vers la base de données dorsale pour être notifié d'un événement de temporisateur concernant un passage de temporisateur sur la base de données dorsale, la demande comprenant des données indiquant l'événement de temporisateur,
dans laquelle le récepteur de l'instance de logique frontale (102a-f, 200) est en outre configuré pour recevoir une notification du fait que l'événement de temporisateur se soit produit.

2. Instance de logique frontale (102a-f, 200) selon la revendication 1, dans laquelle l'événement de temporisateur comprend un terme de temporisateur, et dans laquelle la demande comprend des données indiquant une valeur de terme pour le temporisateur, et/ou dans laquelle l'instance de logique est implémentée sur une machine virtuelle.

3. Instance de logique frontale (102a-f, 200) selon une quelconque revendication précédente, dans laquelle la fonction de réseau est une fonction de réseau 3GPP, et éventuellement dans laquelle la fonction de réseau 3GPP est l'un parmi : une fonction de commande de session d'appel mandataire, P-CSCF, une CSCF de desserte, S-CSCF, une CSCF d'interrogation, I-CSCF, une fonction de commande de passerelle de média (MGCF), un noeud de support de service général de radiocommunication par paquets, SGSN, une entité de gestion de la mobilité, MME, et un serveur de centre de commutation mobile, MSC.

4. Instance de logique frontale (102a-f, 200) selon une quelconque revendication précédente, dans laquelle la demande est émise en utilisant l'un parmi : un protocole SOAP ; et un protocole LDAP, et/ou dans laquelle la demande concerne un objet de données stocké dans la base de données dorsale (106), et dans laquelle l'événement de temporisateur comprend un temps pendant lequel l'objet de données doit vivre, et/ou dans laquelle l'exécutant de logique (214) est en outre configuré pour exécuter une action associée à l'objet de données suite à la réception de la notification du fait que l'événement de temporisateur se soit produit.

5. Procédé permettant de faire fonctionner une instance de logique frontale (102a-f, 200) d'une fonction de réseau dans une architecture sans état d'un réseau de télécommunications, le procédé comprenant :
l'exécution, par un exécutant de logique (214), d'une logique de fonction de réseau pour mettre en oeuvre au moins une partie d'une fonction de réseau du réseau de télécommunications,
l'exécutant de logique commandant un émetteur (202) et un récepteur (204) pour une émission et une réception de données avec une base de données dorsale (106, 300) pendant l'exécution de la logique de fonction de réseau ;
la commande, par un abonné de temporisateur (216), de l'émetteur pour émettre une demande vers la base de données dorsale pour être notifié d'un événement de temporisateur concernant un passage de temporisateur sur la base de données dorsale, la demande comprenant des données indiquant l'événement de temporisateur ; et
la réception, par le récepteur de l'instance de logique frontale (102a-f, 200), d'une notification du fait que l'événement de temporisateur du temporisateur se soit produit.

6. Procédé selon la revendication 5, dans lequel l'événement de temporisateur comprend un terme de temporisateur, et dans lequel la demande comprend des données indiquant une valeur de terme pour le temporisateur, et/ou dans lequel l'instance de logique est implémentée sur une machine virtuelle.

7. Procédé selon la revendication 5 ou 6, dans lequel la fonction de réseau est une fonction de réseau 3GPP, et éventuellement dans lequel la fonction de réseau 3GPP est l'un parmi : une fonction de commande de session d'appel mandataire, P-CSCF, une CSCF de desserte, S-CSCF, une CSCF d'interrogation, I-CSCF, une fonction de commande de passerelle de média (MGCF), un noeud de support de service général de radiocommunication par paquets, SGSN, une entité de gestion de la mobilité, MME, et un serveur de centre de commutation mobile, MSC.

8. Procédé selon l'une quelconque des revendications 5 à 7, dans lequel la demande est émise en utilisant l'un parmi : un protocole SOAP ; et un protocole LDAP, et/ou dans lequel la demande concerne un objet de données stocké dans la base de données dorsale (106), et dans lequel l'événement de temporisateur comprend un temps pendant lequel l'objet de données doit vivre, et/ou dans lequel l'exécutant de logique (214) exécute une action associée à l'objet de données suite à la réception de la notification du fait que l'événement de temporisateur se soit produit.

9. Base de données dorsale (106, 300) pour une utilisation dans une architecture sans état d'un réseau de télécommunications, la base de données dorsale comprenant :
un récepteur (302) configuré pour recevoir une demande provenant d'une instance de logique frontale (102a-f, 200) d'une fonction de réseau dans le réseau de télécommunications pour être notifié d'un événement de temporisateur concernant un temporisateur, la demande comprenant des données indiquant l'événement de temporisateur ;
un gestionnaire de temporisateur (314) configuré pour passer le temporisateur et déterminer si l'événement de temporisateur s'est produit ; et
un notificateur de terme (316) configuré, sur la base du fait de déterminer si l'événement de temporisateur s'est produit, pour commander un émetteur (302) pour émettre une notification vers l'instance de logique frontale.

10. Base de données dorsale (106, 300) selon la revendication 9, dans laquelle l'événement de temporisateur comprend un terme de temporisateur, et dans laquelle la demande comprend des données indiquant une valeur de terme pour le temporisateur.

11. Base de données dorsale (106, 300) selon la revendication 9 ou 10, dans laquelle la demande est émise en utilisant l'un parmi : un protocole SOAP ; et un protocole LDAP.

12. Base de données dorsale (106, 300) selon l'une quelconque des revendications 9 à 11, dans laquelle la demande concerne un objet de données stocké dans la base de données dorsale, et dans laquelle l'événement de temporisateur comprend un temps pendant lequel l'objet de données doit vivre, et éventuellement, comprenant en outre un récupérateur de mémoire (318) configuré pour supprimer l'objet de données s'il est déterminé que l'événement de temporisateur s'est produit, et en outre éventuellement dans laquelle le récupérateur de mémoire (318) est configuré pour attendre pendant une période de temps avant de supprimer l'objet de données.

13. Procédé permettant de faire fonctionner une base de données dorsale (106, 300) pour une utilisation dans une architecture sans état d'un réseau de télécommunications, le procédé comprenant :
la réception, par un récepteur (302), d'une demande provenant d'une instance de logique frontale (102a-f, 200) d'une fonction de réseau dans le réseau de télécommunications pour être notifié d'un événement de temporisateur concernant un temporisateur, la demande comprenant des données indiquant l'événement de temporisateur ;
le passage, par un gestionnaire de temporisateur (314), du temporisateur et le fait de déterminer si l'événement de temporisateur s'est produit ; et
la commande d'un émetteur (302), par un notificateur de terme (316), sur la base du fait de déterminer si l'événement de temporisateur s'est produit, pour émettre une notification vers l'instance de logique frontale.

14. Procédé selon la revendication 13, dans lequel l'événement de temporisateur comprend un terme de temporisateur, et dans lequel la demande comprend des données indiquant une valeur de terme pour le temporisateur, et/ou dans lequel la demande est émise en utilisant l'un parmi : un protocole SOAP ; et un protocole LDAP.

15. Procédé selon la revendication 13 ou 14, dans lequel la demande concerne un objet de données stocké dans la base de données dorsale, et dans lequel l'événement de temporisateur comprend un temps pendant lequel l'objet de données doit vivre, et éventuellement comprenant en outre un récupérateur de mémoire (318) supprimant l'objet de données s'il est déterminé que l'événement de temporisateur s'est produit, et en outre éventuellement dans lequel le récupérateur de mémoire (318) attend pendant une période de temps avant de supprimer l'objet de données.
